# EUROPEAN PATENT SPECIFICATION

(11) **EP 4 372 033 B1**
(45) Date of publication and mention of the grant of the patent: **02.12.2026**
(21) Application number: 23205444.5
(22) Date of filing: 24.10.2023
(51) Int. Cl.: C08J 5/18, C08K 3/36, C08L 23/08

(54) **IONOMER COMPOSITION AND IONOMER FILM PRODUCED THEREFROM**
IONOMERZUSAMMENSETZUNG UND DARAUS HERGESTELLTER IONOMERFILM
COMPOSITION IONOMÈRE ET FILM IONOMÈRE PRODUIT À PARTIR DE CELLE-CI

(30) Priority: 16.11.2022 US 202217987995
(43) Date of publication of application: 22.05.2024
(73) Proprietor: SK Innovation Co., Ltd., Seoul 03188 (KR); SK Geo Centric Co., Ltd., Jongno-gu Seoul 03161 (KR)
(72) Inventor: ZHENG, Yong, 03161 Seoul (KR); KWON, Soon Min, 34124 Daejeon (KR); KIM, Ki Yup, 34124 Daejeon (KR); LEE, Sang Yeup, 34124 Daejeon (KR)
(74) Representative: Lorenz Seidler Gossel Part. mbB

(56) References cited:
- JP-A- H04 288 353
- JP-A- H09 143 283
- US-B2- 8 475 932

## Description

### CROSS-REFERENCE TO RELATED APPLICATIONS

### TECHNICAL FIELD

The following disclosure relates to an ionomer composition and an ionomer film produced therefrom.

### BACKGROUND

An ionomer refers to a thermoplastic plastic comprising both a covalent bond and an ionic bond, and may be an ethylene-based ionomer such as an ethylene-methacrylic acid copolymer or an ethylene-acrylic acid copolymer, for example. In general, an ionomer is being used for bonding, coating, and the like in food packaging films, trays, pouches, and containers.

A conventional ionomer is mainly used for interior coating of an opaque container having less appearance importance due to its poor optical properties and defects in appearance, and specifically, it is because the ionomer lacks transparency by its high haze, does not have a smooth surface when produced into a coating or film, and has a plurality of bad elements such as a fish eye observed on the surface.

In addition, when the ionomer is produced into a film, a strong interaction between wound films occurs by a remaining acrylic acid of the ionomer, and since film blocking shown by the strong interaction causes a big problem with film unwinding in a subsequent film processing, an antiblocking agent is added for improving slipperiness, but as the ionomer applied for a film, an ionomer having excellent transparency is used, and thus, when the antiblocking agent is applied, a haze is increased to deteriorate the transparency of a product.

In order to solve the problem, another additive is added to promote the improvement of transparency, but a significant effect was not shown, and also, resistance to external stimuli such as wear resistance as well as transparency is needed for being used on the outside of a product, but these are not satisfied.

Therefore, in order to secure stable film processability, it is necessary to research and develop an ionomer composition which has excellent slipperiness, has a minimized increase in haze to have excellent transparency, has excellent surface appearance to be applied to a use where visual appeal is important, and has excellent mechanical properties such as wear resistance to be applied to appearance.

Ionomer compositions comprising silica particles have previously been disclosed in, for example, US 8,475,932 B2, JP H09-143283 A and JP H04-288353 A.

### SUMMARY

The present invention aims to providing an ionomer composition having excellent miscibility and excellent transparency and mechanical properties.

The present invention further aims to providing an ionomer film having excellent surface appearance such as transparency, excellent mechanical properties such as wear resistance, and excellent slipperiness.

The present inventors found that when an ionomer composition includes silica particles which satisfy a specific equation and are acidic in an aqueous solution state, the miscibility of the ionomer composition is excellent, and thus, when the composition is produced into a film, surface appearance such as transparency is improved well, and slipperiness, such as wear resistance and coefficient of friction of the film, is significantly improved, thereby completing the present invention.

Against this background, the present invention relates to an ionomer composition, which includes: an ethylene- (meth) acrylic acid ionomer and silica particles, wherein an aqueous solution including the silica particles at a concentration of 50 mg/ml has an acidic pH, and the silica particles satisfy the following Equation 1:
[Equation 1] $\frac{{V}_{pore}}{A \times Dv \left(50\right)} \geq 0.1$
wherein
Vₚₒᵣₑ is a pore volume (ml/g) as measured according to ASTM D4284, A is an effective area (m²/kg) as measured by laser diffraction according to ISO 13320, and Dv(50) is a particle diameter (µm) corresponding to 50% of volume accumulation of a particle size distribution, when measured as described further below.

In an embodiment, the silica particles have a ratio between FWHM and FWQM (FWQM/FWHM) of the particle size distribution of 1.5 or less, when measured as described further below.

In an embodiment, the silica particles have Dv(50) of 1 to 10 µm.

In an embodiment, the aqueous solution including the silica particles at a concentration of 50 mg/ml have a pH of 2 to 5.

In an embodiment, the silica particles have a pore volume of 0.2 to 5 ml/g as measured according to ASTM D4284.

In an embodiment, the silica particles have an effective area of 2000 to 2500 m²/kg, as measured by laser diffraction according to ISO 13320.

In an embodiment, the silica particles have a bulk density of 0.02 to 5 g/ml, when measured as described further below.

In an embodiment, the silica particles are included at 0.1 to 0.5 wt% with respect to the total weight of the ionomer composition.

In an embodiment, the ethylene-(meth)acrylic acid ionomer include 5 to 15 wt% of a (meth)acrylic acid repeating unit.

In an embodiment, the ethylene-(meth)acrylic acid ionomer have a degree of neutralization by one or two or more metals selected from the group consisting of lithium, sodium, potassium, calcium, magnesium, manganese, cobalt, nickel, copper, zinc, and lead of 25 to 60%.

In an embodiment, a melt flow index of the ethylene-(meth)acrylic acid ionomer composition is 1 to 10 g/10 min as measured in accordance with ASTM D1238) at 190°C under the conditions of a loading of 2.16 kg.

The invention further relates to an ionomer film produced from the ionomer composition according to the invention.

In an embodiment, the film has a maximum coefficient of static friction (µₛ) of 0.2 or less as measured in accordance with ISO 8295.

In an embodiment, the film has a wear resistance test result value of 40 mg or less as measured in accordance with ASTM 4060.

In an embodiment, the film has a haze of 15% or less as measured in accordance with ASTM D1003.

Other features and aspects will be apparent from the following detailed description, the drawings, and the claims.

### BRIEF DESCRIPTION OF THE DRAWINGS

FIG. 1 shows FWHM and FWQM in a particle size distribution diagram of silica particles [1].
FIG. 2 is an image in which film appearances of Example 9 and Comparative Example 9 were observed.

### DETAILED DESCRIPTION OF EMBODIMENTS

The present invention provides an ionomer composition including an ethylene-(meth)acrylic acid ionomer and silica particles, wherein an aqueous solution including the silica particles at a concentration of 50 mg/ml has an acidic pH, and the silica particles satisfy the following Equation 1:

[Equation 1] $\frac{{V}_{pore}}{A \times Dv \left(50\right)} \geq 0.1$
wherein
Vₚₒᵣₑ is a pore volume (ml/g), A is an effective area (m²/kg) as measured by laser diffraction according to ISO 13320, and Dv(50) is a particle diameter (µm) corresponding to 50% of volume accumulation of a particle size distribution, when measured as described further below.

In an embodiment, the silica particles satisfy the following Equation 2:

[Equation 2] $0.1 \leq \frac{{V}_{pore}}{A \times Dv \left(50\right)} \leq 0.3 .$

In an embodiment, the silica particles satisfy the following Equation 3:

[Equation 3] $0.1 \leq \frac{{V}_{pore}}{A \times Dv \left(50\right)} \leq 0.2 .$

In Equations 2 and 3, Vₚₒᵣₑ, A, and Dv(50) are as described in Equation 1.

The ionomer composition according to the invention has excellent miscibility, has well-improved surface appearance such as transparency when produced into a film, and may have significantly improved wear resistance and coefficient of friction of the film.

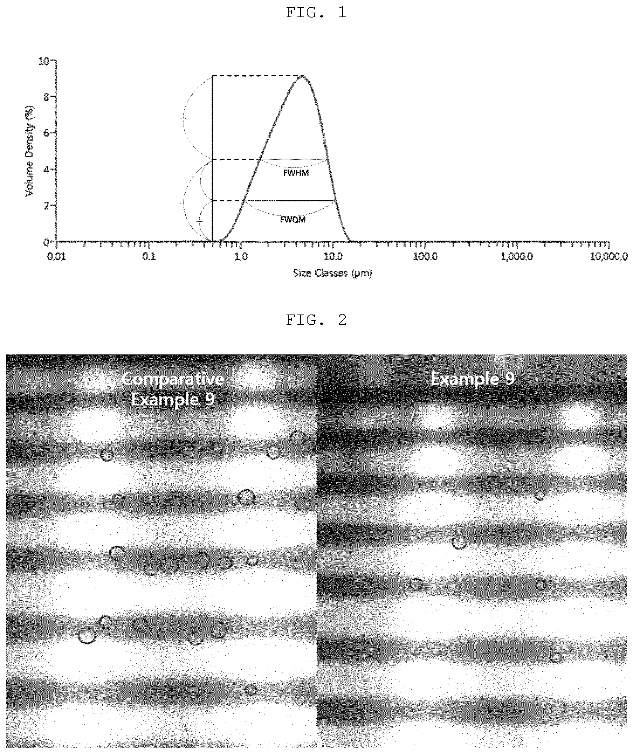

According to an embodiment, the silica particles have a ratio between full width half maximum (FWHM) and full width quarter maximum (FWQM) (FWQM/FWHM) of 1.7 or less, or 1 to 1.5, and or 1.2 to 1.4, when measured as described further below. As seen in FIG. 1, FWHM refers to a value of difference between a maximum particle diameter and a minimum particle diameter at a maximum value in the particle size distribution, and FWQM refers to a value of difference between a maximum particle diameter and a minimum particle diameter at 25% of a maximum value in the particle size distribution.

According to an embodiment, Dv(10) of the silica particles is 0.1 to 5 µm, or 0.5 to 3 µm, or 1 to 2 µm. Dv(10) is a particle diameter (µm) corresponding to 10% of volume accumulation of the particle size distribution, when measured as described further below.

According to an embodiment, Dv(50) of the silica particles is 1 to 10 µm, or 1 to 5 µm, or 2 to 5 µm.

According to an embodiment, Dv(90) of the silica particles is 1 to 15 µm, or 3 to 10 µm, or 5 to 8.5 µm. Dv(90) is a particle diameter (µm) corresponding to 90% of volume accumulation of the particle size distribution, when measured as described further below.

According to an embodiment, an aqueous solution including the silica particles at a concentration of 50 mg/ml have a pH of 1 to 7, or 2 to 5, or 3 to 4.

According to an embodiment, the silica particles have a pore volume of 0.2 to 5 ml/g, or 0.5 to 4 ml/g, or 0.8 to 2 ml/g.

According to an embodiment, the silica particles have an effective area of 1000 to 5000 m²/kg, or 1500 to 3000 m²/kg, or 2000 to 2500 m²/kg, as measured by laser diffraction according to ISO 13320.

According to an embodiment, the silica particles have a bulk density of 0.02 to 5 g/ml, or 0.02 to 3 g/ml, or 0.05 to 1 g/ml, when measured as described further below.

According to an embodiment, the silica particles are included at 0.01 to 5 wt%, or 0.05 to 2 wt%, or 0.1 to 0.5 wt% with respect to the total weight of the ionomer composition.

According to an embodiment, the ethylene-(meth)acrylic acid ionomer include 1 to 30 wt%, or 5 to 25 wt%, or 5 to 15 wt% of the (meth)acrylic acid repeating unit. In addition, the (meth)acrylic acid may be an acrylic acid or a methacrylic acid.

According to an embodiment, the ethylene-(meth)acrylic acid ionomer have a degree of neutralization by one or two or more metals selected from the group consisting of lithium, sodium, potassium, calcium, magnesium, manganese, cobalt, nickel, copper, zinc, and lead of 5 to 50%, or 25 to 60%, or 30 to 55%. In addition, the metal may be zinc, sodium, or potassium.

According to an embodiment, a melt flow index of the ethylene-(meth)acrylic acid ionomer composition is 0.5 to 10 g/10 min, or 1 to 10 g/10 min, or 1 to 5 g/10 min, as measured in accordance with ASTM D1238 at 190°C under the conditions of a loading of 2.16 kg.

The invention further provides an ionomer film produced from the ionomer composition of the invention. The ionomer film may have a thickness of 1 µm to 500 mm or 10 µm to 10 mm.

According to an embodiment, the film has a maximum coefficient of static friction (µₛ) of 0.1 to 0.5, or 0.2 or less, as measured in accordance with ISO 8295.

According to an embodiment, the film has a maximum coefficient of kinetic friction (µ_{d}) of 0.1 to 0.5, or 0.2 or less, or 0.15 or less, as measured in accordance with ISO 8295.

According to an embodiment, the film has a wear resistance test result value of 40 mg or less, or 38 mg or less, or 1 to 38 mg, as measured in accordance with ASTM 4060.

According to an embodiment, the film has a haze of 15% or less, or 1 to 13%, or 5 to 12%, or 10% or less, as measured in accordance with ASTM D1003, when its thickness is 100 µm.

Hereinafter, the present invention will be described in more detail with reference to the examples and the comparative examples.

The physical properties of the following examples and comparative examples were measured by the following methods.

### [Method of evaluating physical properties]

### 1. pH

Silica particles were dissolved in water at a concentration of 50 mg/ml and then filtered with a filter to filter out an insoluble matter to prepare a sample solution, and the pH of the sample solution was measured using a pH meter (Mettler Toledo, S400) and is shown in the following Table 1.

### 2. Pore volume [ml/g] and bulk density [g/ml]

The pore volume of silica particles was measured by BET nitrogen adsorption according to ASTM D4284, and is shown in the following Table 1.

In addition, 2.5 g of silica particles were added to a 50 ml plastic tube to measure the volume (ml), and the number of grams (2.5 g) was divided by the volume (ml) to calculate a bulk density, and the calculated value is shown in the following Table 1.

### 3. Effective area [m²/kg]

The effective area of silica particles was measured according to ISO 13320 using a laser diffraction particle size analyzer (Malvern. Mastersizer 3000), and is shown in the following Table 1.

### 4. Particle size distribution

A laser diffraction particle size analyzer (Malvern. Mastersizer 3000) was used to measure, according to ISO 13320, the particle size distribution of a 1 wt% silica particle aqueous solution to obtain a distribution diagram. A particle diameter corresponding to 50% of a volume accumulation of the particle size distribution was set as Dv(50) and is shown in the following Table 1, and the particle size distribution diagram of the silica particles of Example 1 is shown in FIG. 1.

A value of difference between a maximum particle diameter and a minimum particle diameter at a maximum value in the particle size distribution was defined as full width at half maximum (FWHM), a value of difference between a maximum particle diameter and a minimum particle diameter at 25% of a maximum value in the particle size distribution was defined as full width at quarter maximum (FWQM), and a ratio thereof (FWQM/FWHM) was calculated and is shown in the following Table 1.

### 5. Haze and surface appearance

The haze of a film (thickness: 100±1 µm) was measured with a Hazemeter (NDH8000, Nippon Denshoku) in accordance with ASTM D1003.

In addition, the surface appearance of a film (thickness: 100 µm) produced by melting and extruding an ionomer composition was observed with the naked eye, bad elements such as gel, a fish eye, and unevenness on the surface were evaluated according to the following criteria, and the results are shown in the following Table 2.
⊚ (excellent): surface having almost no fisheye or no gel and being smooth.
∘ (good): surface having less than 5 fish eyes or gels in an area of 1 cm² and being even.
△ (insufficient): surface having 5 to 20 fish eyes or gels in an area of 1 cm² and being somewhat uneven.
× (bad): surface having more than 20 fish eyes or gels in an area of 1 cm² and being very uneven.

### 6. Melt flow index (MFI) [g/10 min]

A melt flow index (MFI) was measured at a temperature of 190°C under the conditions of a loading of 2.16 kg in accordance with ASTM D1238. The measured values are listed in Table 3.

### 7. Coefficient of friction (COF)

A maximum coefficient of static friction (µₛ) and a maximum coefficient of kinetic fraction (µ_{d}) were measured in accordance with ISO 8295. The measured values are listed in Table 3.

### 8. Wear resistance test

Wear resistance was measured in accordance with ASTM 4060, and a weight (mg) lost in 400 cycles was measured and is shown in the following Table 3. The smaller the weight was, the better the wear resistance was evaluated.

### [Examples 1 to 8, and Comparative Examples 1 to 8] Preparation of ionomer composition

An ionomer composition including 100 parts by weight of an ethylene acrylic acid ionomer (EAA, 9.7 wt% of acrylic acid) or an ethylene methacrylic acid ionomer (EMAA, 9 wt% of acrylic acid) and 0.2 parts by weight of silica particles having the physical properties of the following Table 1 was added to a twin-screw reaction extruder, and was melted and extruded at 180°C at 300 rpm to produce an ionomer film.

**[Table 1]**

| Silica particles | [1] | [2] | [3] | [4] | [5] | [6] | [7] | [8] |
|---|---|---|---|---|---|---|---|---|
| pH | 3.7 | 5.3 | 4.4 | 5.8 | 6.2 | 7.7 | 7.1 | 5.8 |
| Bulk density | 0.17 | 0.13 | 0.11 | 0.19 | 0.31 | 0.08 | 0.23 | 0.30 |
| Pore volume | 1 | 0.8 | 1.6 | 1.6 | 0.6 | 1.6 | 0.6 | 0.6 |
| Effective area | 2029 | 2132 | 2312 | 2007 | 2083 | 2337 | 2880 | 1939 |
| Dv(50) | 3.81 | 2.17 | 2.68 | 2.1 | 4.03 | 2.86 | 2.5 | 4.51 |
| Equation 1 | 0.1294 | 0.1729 | 0.2582 | 0.3796 | 0.0715 | 0.2394 | 0.0833 | 0.0686 |
| FWHM | 7.26 | 7.3 | 8.00 | 7.8 | 7.91 | 4.05 | 3.98 | 7.25 |
| FWQM | 9.72 | 9.8 | 9.11 | 10.8 | 10.86 | 5.84 | 5.49 | 10.46 |
| FWQM/ FWHM | 1.339 | 1.581 | 1.222 | 1.625 | 1.373 | 1.442 | 1.379 | 1.443 |

**[Table 2]**

| | Ionomer composition | | Evaluation of physical properties | |
|---|---|---|---|---|
| | Ionomer | Silica particles | Haze [%] | Surface appearance |
| Example 1 | EAA | [1] | 11.2 | ⊚ |
| Example 2 | EMAA | [1] | 11.9 | ⊚ |
| Example 3 | EAA | [2] | 11.7 | ⊚ |
| Example 4 | EMAA | [2] | 12.3 | ○ |
| Example 5 | EAA | [3] | 12.5 | ○ |
| Example 6 | EMAA | [3] | 13.2 | ○ |
| Example 7 | EAA | [4] | 14.8 | △ |
| Example 8 | EMAA | [4] | 15.3 | △ |
| Comparative Example 1 | EAA | [5] | 17.5 | ○ |
| Comparative Example 2 | EMAA | [5] | 18.9 | ○ |
| Comparative Example 3 | EAA | [6] | 7.0 | × |
| Comparative Example 4 | EMAA | [6] | 7.0 | × |
| Comparative Example 5 | EAA | [7] | 16.5 | ○ |
| Comparative Example 6 | EMAA | [7] | 17.3 | ○ |
| Comparative Example 7 | EAA | [8] | 16.6 | △ |
| Comparative Example 8 | EMAA | [8] | 18.3 | ○ |

As seen in Tables 1 and 2, the ionomer composition of the examples including the silica particles satisfying Equation 1 showed a lower haze and better surface appearance than the composition of the comparative examples. Thus, it was confirmed that a film produced using the ionomer composition according to an exemplary embodiment had well-improved surface appearance such as transparency. In particular, the haze of the ionomer composition satisfying Equation 1, or Equation 2, or Equation 3 was measured lower, and the surface appearance thereof was excellent. In addition, it was confirmed from the comparison of Example 5 and Comparative Example 3 that even in the case of the silica particles having similar physical properties, when their pH was acidic, the surface appearance was excellent.

### [Example 9 and Comparative Example 9] Preparation of ionomer composition

An ionomer composition including 96 wt% of an ethylene acrylic acid ionomer (13.5 wt% of acrylic acid), 3 wt% of sodium carbonate (Na₂CO₃), 0.6 wt% of oleyl palmitamide, 0.2 wt% of behenamide, and 0.2 wt% of [1] or [5] of the silica particles of Table 1 was added to a twin-screw reaction extruder, and was melted and extruded at 180°C at 300 rpm to produce a film having a thickness of 100 µm.

**[Table 3]**

| | Silica particles | MFI | Haze [%] | µₛ | µ_{d} | Wear resistance |
|---|---|---|---|---|---|---|
| Example 9 | [1] | 2.9 | 9.1 | 0.18 | 0.14 | -36.2 |
| Comparative Example 9 | [5] | 3.7 | 19.7 | 0.24 | 0.22 | -43.2 |

The ionomer composition of Example 9 including the silica particles [1] and the ionomer composition of Comparative Example 9 including the silica particles [5] were melted and extruded to produce ionomer films having a thickness of 100 µm, and the surfaces of the films were compared, which is shown in FIG. 2. In FIG. 2, it was observed that the film of Example 9 had a smooth surface and had significantly fewer bad elements such as fish eyes, seeds, gels, and the like than the film of Comparative Example 9. In addition, as a result of measuring Gel area GI200 (Gel Index, measuring the sum of areas of all defects having a diameter of 200 um or more using a film appearance inspector (OCS from OCS GmbH)) of the ionomer films according to Example 9 and Comparative Example 9, it was confirmed that the film produced using the ionomer composition according to an exemplary embodiment was able to show better surface appearance, in that GI200 of Example 9 was shown to be 24.6 and GI200 of Comparative Example 9 was shown to be 105.8.

In addition, as seen in Table 3, it was confirmed that the ionomer film of Example 9 had a lower haze and better coefficient of friction and wear resistance test result value than Comparative Example 9, and thus, the film produced using the ionomer composition according to an exemplary embodiment had a minimized increase in haze to have excellent transparency and had a low coefficient of friction to have excellent slipperiness and easily secure stable film processability, and furthermore, had excellent surface appearance to be applied to a use where visual appeal is important and had excellent mechanical properties such as wear resistance to be applied to appearance.

## Claims

1. An ionomer composition comprising: an ethylene-(meth)acrylic acid ionomer and silica particles,
wherein an aqueous solution comprising the silica particles at a concentration of 50 mg/ml has an acidic pH, and the silica particles satisfy the following Equation 1: [Equation 1] $\frac{{V}_{pore}}{A \times Dv \left(50\right)} \geq 0.1$
wherein
Vₚₒᵣₑ is a pore volume (ml/g) as measured according to ASTM D4284, A is an effective area (m²/kg) as measured by laser diffraction according to ISO 13320, and Dv(50) is a particle diameter (µm) corresponding to 50% of volume accumulation of a particle size distribution, when measured as described in the specification.

2. The ionomer composition of claim 1, wherein the silica particles have a ratio between FWHM and FWQM (FWQM/FWHM) of the particle size distribution of 1.5 or less, when measured as described in the specification.

3. The ionomer composition of any preceding claim, wherein the silica particles have Dv(50) of 1 to 10 µm, when measured as described in the specification.

4. The ionomer composition of any preceding claim, wherein the aqueous solution comprising the silica particles at a concentration of 50 mg/ml has a pH of 2 to 5.

5. The ionomer composition of any preceding claim, wherein the silica particles have a pore volume of 0.2 to 5 ml/g as measured according to ASTM D4284.

6. The ionomer composition of any preceding claim, wherein the silica particles have an effective area of 2000 to 2500 m²/kg, as measured by laser diffraction according to ISO 13320.

7. The ionomer composition of any preceding claim, wherein the silica particles have a bulk density of 0.02 to 5 g/ml, when measured as specified in the description.

8. The ionomer composition of any preceding claim, wherein the silica particles are comprised at 0.1 to 0.5 wt% with respect to a total weight of the ionomer composition.

9. The ionomer composition of any preceding claim, wherein the ethylene-(meth)acrylic acid ionomer comprises 5 to 15 wt% of a (meth)acrylic acid repeating unit.

10. The ionomer composition of any preceding claim, wherein the ethylene- (meth) acrylic acid ionomer has a degree of neutralization by one or two or more metals selected from the group consisting of lithium, sodium, potassium, calcium, magnesium, manganese, cobalt, nickel, copper, zinc, and lead of 25 to 60%.

11. The ionomer composition of any preceding claim, wherein a melt flow index of the ethylene-(meth)acrylic acid ionomer composition is 1 to 10 g/10 min as measured in accordance with ASTM D1238 at 190°C under the conditions of a loading of 2.16 kg.

12. An ionomer film produced from the ionomer composition of any one of claims 1 to 11.

13. The ionomer film of claim 12, wherein the film has a maximum coefficient of static friction (µₛ) of 0.2 or less as measured in accordance with ISO 8295.

14. The ionomer film of claim 12 or 13, wherein the film has a wear resistance test result value of 40 mg or less as measured in accordance with ASTM 4060.

15. The ionomer film of any one of claims 12 to 14, wherein the film has a haze of 15% or less as measured in accordance with ASTM D1003.

## Patentansprüche

1. Ionomerzusammensetzung, umfassend: ein Ethylen-(Meth)acrylsäure-Ionomer und Siliciumdioxidteilchen,
wobei eine wässrige Lösung, die die Siliciumdioxidteilchen in einer Konzentration von 50 mg/ml umfasst, einen sauren pH-Wert aufweist, und die Siliciumdioxidteilchen die folgende Gleichung 1 erfüllen: [Gleichung 1] $\frac{{V}_{pore}}{A \times Dv \left(50\right)} \geq 0.1$
wobei
Vₚₒᵣₑ ein Porenvolumen (ml/g) ist, wie gemessen gemäß ASTM D4284, A eine effektive Oberfläche (m²/kg) ist, wie gemessen durch Laserbeugung gemäß ISO 13320, und Dv(50) ein Teilchendurchmesser (µm) ist, der 50 % der Volumenakkumulation einer Teilchengrößenverteilung entspricht, wenn wie in der Beschreibung beschrieben gemessen.

2. Ionomerzusammensetzung nach Anspruch 1, wobei die Siliciumdioxidteilchen ein Verhältnis zwischen FWHM und FWQM (FWQM/FWHM) der Teilchengrößenverteilung von 1,5 oder weniger aufweisen, wenn wie in der Beschreibung beschrieben gemessen.

3. Ionomerzusammensetzung nach einem der vorhergehenden Ansprüche, wobei die Siliciumdioxidteilchen einen Dv(50) von 1 bis 10 µm aufweisen, wenn wie in der Beschreibung beschrieben gemessen.

4. Ionomerzusammensetzung nach einem der vorhergehenden Ansprüche, wobei die wässrige Lösung, die die Siliciumdioxidteilchen in einer Konzentration von 50 mg/ml umfasst, einen pH-Wert von 2 bis 5 aufweist.

5. Ionomerzusammensetzung nach einem der vorhergehenden Ansprüche, wobei die Siliciumdioxidteilchen ein Porenvolumen von 0,2 bis 5 ml/g aufweisen, wie gemessen gemäß ASTM D4284.

6. Ionomerzusammensetzung nach einem der vorhergehenden Ansprüche, wobei die Siliciumdioxidteilchen eine effektive Oberfläche von 2000 bis 2500 m²/kg aufweisen, wie gemessen durch Laserbeugung gemäß ISO 13320.

7. Ionomerzusammensetzung nach einem der vorhergehenden Ansprüche, wobei die Siliciumdioxidteilchen eine Schüttdichte von 0,02 bis 5 g/ml aufweisen, wenn wie in der Beschreibung angegeben gemessen.

8. Ionomerzusammensetzung nach einem der vorhergehenden Ansprüche, wobei die Siliciumdioxidteilchen zu 0,1 bis 0,5 Gew.-% bezogen auf ein Gesamtgewicht der Ionomerzusammensetzung umfasst sind.

9. Ionomerzusammensetzung nach einem der vorhergehenden Ansprüche, wobei das Ethylen-(Meth)acrylsäure-Ionomer 5 bis 15 Gew.-% einer (Meth)acrylsäure-Wiederholungseinheit umfasst.

10. Ionomerzusammensetzung nach einem der vorhergehenden Ansprüche, wobei das Ethylen-(Meth)acrylsäure-Ionomer einen Neutralisationsgrad durch ein oder zwei oder mehr Metalle, ausgewählt aus der Gruppe bestehend aus Lithium, Natrium, Kalium, Calcium, Magnesium, Mangan, Kobalt, Nickel, Kupfer, Zink und Blei, von 25 bis 60 % aufweist.

11. Ionomerzusammensetzung nach einem der vorhergehenden Ansprüche, wobei ein Schmelzflussindex der Ethylen-(Meth)acrylsäure-Ionomerzusammensetzung 1 bis 10 g/10 min beträgt, wie gemessen gemäß ASTM D1238 bei 190 °C unter den Bedingungen einer Last von 2,16 kg.

12. Ionomerfolie, hergestellt aus der Ionomerzusammensetzung nach einem der Ansprüche 1 bis 11.

13. Ionomerfolie nach Anspruch 12, wobei die Folie einen maximalen statischen Reibungskoeffizienten (µs) von 0,2 oder weniger aufweist, wie gemessen gemäß ISO 8295.

14. Ionomerfolie nach Anspruch 12 oder 13, wobei die Folie einen Ergebniswert des Verschleißfestigkeitstests von 40 mg oder weniger aufweist, wie gemessen gemäß ASTM 4060.

15. Ionomerfolie nach einem der Ansprüche 12 bis 14, wobei die Folie eine Trübung von 15 % oder weniger aufweist, wie gemessen gemäß ASTM D1003.

## Revendications

1. Composition d'ionomère comprenant : un ionomère d'éthylène-acide (méth)acrylique et des particules de silice,
dans laquelle une solution aqueuse comprenant les particules de silice à une concentration de 50 mg/ml a un pH acide, et les particules de silice satisfont à l'Équation 1 suivante : [Equation 1] $\frac{{V}_{pore}}{A \times Dv \left(50\right)} \geq 0.1$
où
Vₚₒᵣₑ est un volume de pore (ml/g) tel que mesuré selon ASTM D4284, A est une surface effective (m²/kg) telle que mesurée par diffraction laser selon ISO 13320, et Dv(50) est un diamètre de particule (µm) correspondant à 50 % de l'accumulation en volume d'une distribution de taille de particule, lorsque mesuré tel que décrit dans le mémoire descriptif.

2. Composition d'ionomère selon la revendication 1, dans laquelle les particules de silice ont un rapport entre FWHM et FWQM (FWQM/FWHM) de la distribution de taille de particule de 1,5 ou moins, lorsque mesuré tel que décrit dans le mémoire descriptif.

3. Composition d'ionomère selon l'une quelconque des revendications précédentes, dans laquelle les particules de silice ont un Dv(50) de 1 à 10 µm, lorsque mesuré tel que décrit dans le mémoire descriptif.

4. Composition d'ionomère selon l'une quelconque des revendications précédentes, dans laquelle la solution aqueuse comprenant les particules de silice à une concentration de 50 mg/ml a un pH de 2 à 5.

5. Composition d'ionomère selon l'une quelconque des revendications précédentes, dans laquelle les particules de silice ont un volume de pore de 0,2 à 5 ml/g tel que mesuré selon ASTM D4284.

6. Composition d'ionomère selon l'une quelconque des revendications précédentes, dans laquelle les particules de silice ont une surface effective de 2000 à 2500 m²/kg, telle que mesurée par diffraction laser selon ISO 13320.

7. Composition d'ionomère selon l'une quelconque des revendications précédentes, dans laquelle les particules de silice ont une masse volumique apparente de 0,02 à 5 g/ml, lorsque mesurée tel que spécifié dans la description.

8. Composition d'ionomère selon l'une quelconque des revendications précédentes, dans laquelle les particules de silice sont comprises à raison de 0,1 à 0,5 % en poids par rapport à un poids total de la composition d'ionomère.

9. Composition d'ionomère selon l'une quelconque des revendications précédentes, dans laquelle l'ionomère d'éthylène-acide (méth)acrylique comprend 5 à 15 % en poids d'un motif de répétition d'acide (méth)acrylique.

10. Composition d'ionomère selon l'une quelconque des revendications précédentes, dans laquelle l'ionomère d'éthylène-acide (méth)acrylique a un degré de neutralisation par un ou deux métaux ou plus choisis dans le groupe constitué de lithium, sodium, potassium, calcium, magnésium, manganèse, cobalt, nickel, cuivre, zinc, et plomb de 25 à 60 %.

11. Composition d'ionomère selon l'une quelconque des revendications précédentes, dans laquelle un indice de fluidité à chaud de la composition d'ionomère d'éthylène-acide (méth)acrylique est de 1 à 10 g/10 min tel que mesuré conformément à ASTM D1238 à 190 °C dans les conditions d'une charge de 2,16 kg.

12. Film d'ionomère produit à partir de la composition d'ionomère selon l'une quelconque des revendications 1 à 11.

13. Film d'ionomère selon la revendication 12, dans lequel le film a un coefficient de frottement statique (µs) maximal de 0,2 ou moins tel que mesuré conformément à ISO 8295.

14. Film d'ionomère selon la revendication 12 ou 13, dans lequel le film a une valeur de résultat d'essai de résistance à l'usure de 40 mg ou moins telle que mesurée conformément à ASTM 4060.

15. Film d'ionomère selon l'une quelconque des revendications 12 à 14, dans lequel le film a un voile de 15 % ou moins tel que mesuré conformément à ASTM D1003.
